# EUROPEAN PATENT APPLICATION

(11) **EP 3 340 048 A1**
(43) Date of publication of application: **27.06.2018**
(21) Application number: 17206192.1
(22) Date of filing: 08.12.2017
(51) Int. Cl.: G06F 9/455, G06F 9/50

(54) **SYSTEM AND METHOD FOR CONTENT - APPLICATION SPLIT**

(30) Priority: 20.12.2016 US 201615384624
(71) Applicant: Schneider Electric Software, LLC, Lake Forest, CA 92630 (US)
(72) Inventor: Prinsloo, Johan, Fallbrook, CA California 92028 (US); Tarcha, Geoffrey, Solana Beach, CA California 92075 (US); Li, Roy, Yorba Linda, CA California 92886 (US); Annamalai, Jagan, Fulshear, TX Texas 77441 (US); Duong, Chau, Vista, CA California 92081 (US); Goorchenko, Andrew, Oceanside, CA California 92054 (US); Lukman, Marlina, San Diego, CA California 92127 (US); Willetts, Ian, Carlsbad, CA California 92008 (US)
(74) Representative: Friese Goeden Patentanwälte PartGmbB

(57) **Abstract**

Virtual machine storage and runtime provisioning comprises accessing a base generalized reusable virtual machine image and configuring memory according to an instantiated copy of the base virtual machine image. Project specific content is accessed from a central content store configured to store content separately from the base machine image. The instantiated machine image and project specific content are linked at launch time to form a project specific functioning virtual machine. After completion of the project specific function, the project specific content is stored separately and the project specific functioning virtual machine is removed from memory. This minimizes use of virtual machine instances to only when needed and makes content available to other users. This also minimizes proliferation of unused project specific function virtual machine images, frees-up storage space, and enables easier automated maintenance of separately stored base virtual machine images and updating of the centralized plurality of project specific contents.

## Description

### FIELD OF THE INVENTION

The invention disclosed relates to optimal use of virtual machine resources, creating instances at runtime on demand and disposing them off once the user is no longer actively using them, by decoupling the user/project created application specific content from the O/S and application software installed on the virtual machines and storing it separately in a centralized content store.

### BACKGROUND OF THE INVENTION

Existing systems and methods of utilizing virtual machines are highly inefficient and expensive. This is done so that the user's work (application content) is available the next time the user wants to continue her work. This would have to be done every time the user modifies her content and would lead to a rapid proliferation of virtual machine images. For a system with multiple users working on multiple projects, the result is an ever-growing library of machine images that need to be persisted and maintained with new operating system patches and software updates. This is both expensive and hard to maintain. The user's application content is also tied to a virtual machine image and is not easily available for use elsewhere or for other users, unless it is manually transferred over.

What is needed is a technology to solve the problem of inefficient use of virtual machine instances and to avoid the rapid proliferation of machine images.

### SUMMARY OF THE INVENTION

Example embodiments of the invention provide improved application content storage, virtual machine management, and runtime provisioning to solve the problem of inefficient use of virtual machine instances and to avoid the rapid proliferation of machine images.

Example embodiments of the invention comprise accessing a base generalized reusable virtual machine image and configuring memory according to an instantiated copy of the base virtual machine image. Project specific content is accessed from a central content store configured to store the content separately from the base virtual machine image, for improved maintainability of the base virtual machine image and the content. The instantiated copy of the base virtual machine image and project specific content are linked at launch time to form a project specific functioning virtual machine. After completion of the project specific function, the project specific content is stored separately and the project specific functioning virtual machine is removed from the memory. This minimizes the use of virtual machine instances to only when they are needed. This makes the project specific content available for use elsewhere and by other permitted users. This also minimizes proliferation of unused project specific function virtual machine images, frees-up the need for additional storage space and enables easier automated maintenance of the separately stored base virtual machine image and updating of the centralized plurality of project specific contents.

In an example embodiment of the invention, a virtual machine storage and runtime provisioning system comprises a means for accessing a base generalized reusable virtual machine image and configuring memory by cloning an instantiated copy of the base generalized reusable virtual machine image. The base generalized reusable virtual machine image comprises an image of a reusable virtual machine instance that can be duplicated or reactivated for later use.

Each of a plurality of project specific contents is configurable to link to the instantiated copy of the base generalized reusable virtual machine image at runtime, forming a project specific functioning virtual machine. The plurality of project specific contents is stored in a central content store of the memory. In accordance with embodiments of the invention, the central content store is configured to store the plurality of project specific contents separately from the base generalized reusable virtual machine image, for improved maintainability of the base generalized reusable virtual machine image and the plurality of project specific contents.

The example embodiment of the invention further comprises a means for accessing at least one project specific content stored in the central content store. The instantiated copy of the base generalized reusable virtual machine image is linked with the at least one project specific content, to form a project specific functioning virtual machine in the memory, in response to a launch command. The launch command may be issued to realize a project specific functioning virtual machine to perform a project specific function. The running generates updated project specific content.

The example embodiment of the invention further comprises a means for running the project specific functioning virtual machine to perform the project specific function.

The example embodiment of the invention further comprises a means for removing from the memory, the project specific functioning virtual machine after completion of the project specific function and storing the updated project specific content in the central content store. In this manner proliferation is minimized of unused project specific function virtual machine images in order to free-up storage space in the memory. In addition, automated maintenance may be enabled, of the generalized reusable virtual machine and automated updating may be enabled, of the centralized plurality of project specific contents.

The example embodiment of the invention further comprises a guest agent configured to link the instantiated copy of the base generalized reusable virtual machine image and the project specific content, to form the project specific functioning virtual machine.

The example embodiment of the invention further comprises metadata including specific parameter values for a parameterized machine configuration and parameterized application configuration that are to be provided at provisioning time. The metadata allows the maintenance of generic application containers that are specialized at the last minute before users access the application. The metadata helps solve the problem of maintenance on machine images with pre-installed applications, so that a separate machine image need not be maintained for each project.

These and other embodiments of the invention provide improvements in computer capabilities. The virtual machine storage and runtime provisioning system, minimizes proliferation of unused project specific function virtual machine images, frees-up storage space in the memory, and enables automated maintenance on the generalized reusable virtual machine and updating of the centralized plurality of project specific contents.

### DESCRIPTION OF THE FIGURES

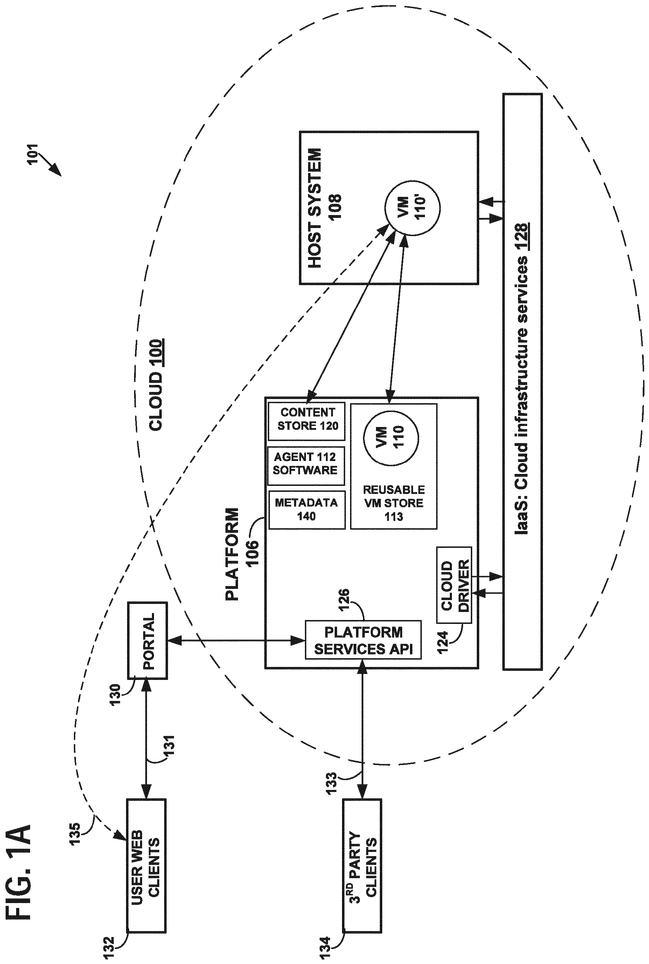

Figure 1A illustrates an example embodiment of the invention, showing architecture to provision a project-specific functioning virtual machine in a host system, in response to a launch command issued by a user to access a platform, via a web portal. The platform's main function is to provision host systems, using API calls to cloud Infrastructure-as-a-Service providers.

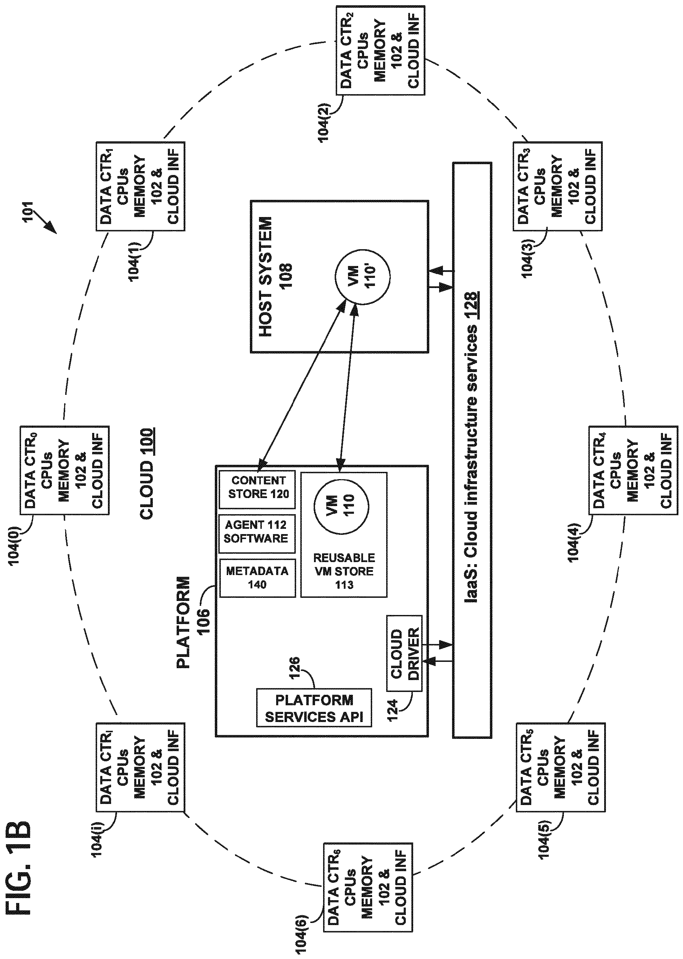

Figure 1B illustrates the example architecture of Figure 1A, showing the platform as a concurrent and distributed application that runs across a plurality of cloud data centers, to provision host systems and manage the virtual machines launched in the host systems.

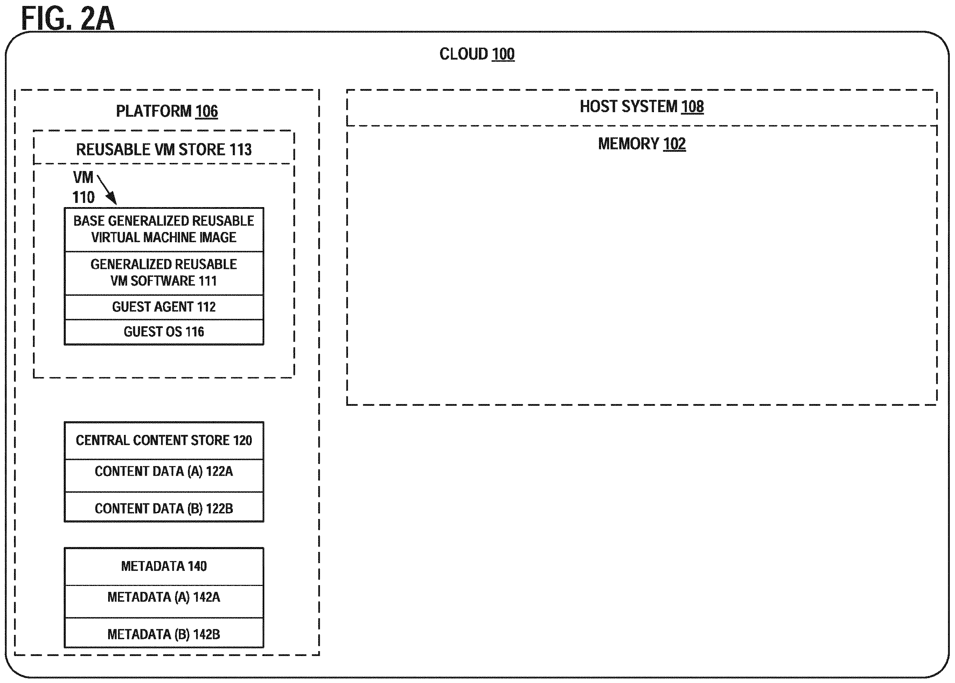

Figure 2A illustrates an example embodiment of the invention, showing a base generalized reusable virtual machine image in a reusable VM store in the platform, which includes generalized reusable virtual machine executable software, a guest operating system, and a guest agent. The figure also shows a central content store and a metadata store in the platform. In accordance with embodiments of the invention, the central content store is configured to store the plurality of project specific contents separately from the base generalized reusable virtual machine image, for improved maintainability of the base generalized reusable virtual machine image and the plurality of project specific contents.

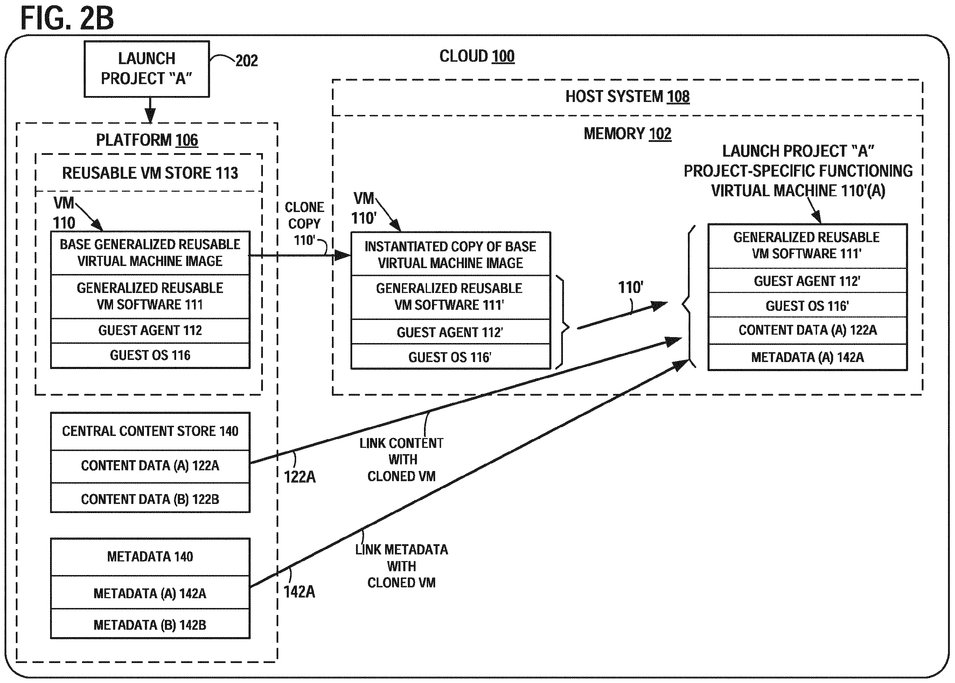

Figure 2B illustrates an example embodiment of the invention of Figure 2A, showing the platform responding to a launch command to realize a project specific functioning virtual machine to perform project-specific function "A". In response, the platform accesses the base generalized reusable virtual machine image and configures memory in the host system by cloning an instantiated copy of the base generalized reusable virtual machine image. The instantiated copy includes replicas of the generalized reusable virtual machine executable software, the guest operating system, and the guest agent. The platform also accesses metadata (A) and content data (A). The guest agent is configured to link the instantiated copy of the base generalized reusable virtual machine image with the metadata (A) and the project specific content data (A) to form the project specific functioning virtual machine. The project-specific functioning virtual machine runs in the host system, to perform the project-specific function "A", in response to the launch command issued by the user or another program.

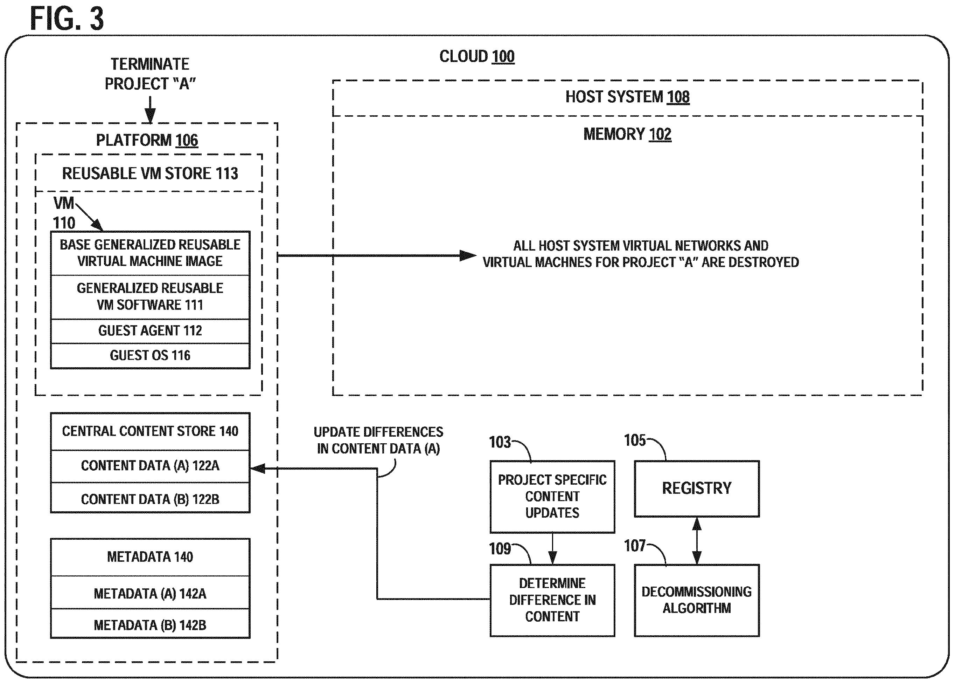

Figure 3 illustrates an example embodiment of the invention of Figure 2B, showing decommissioning of all resources used by the project specific functioning virtual machine in the host system and reclaiming the memory portions occupied by the project specific functioning virtual machine, after the project-specific function "A" has been completed or terminated.

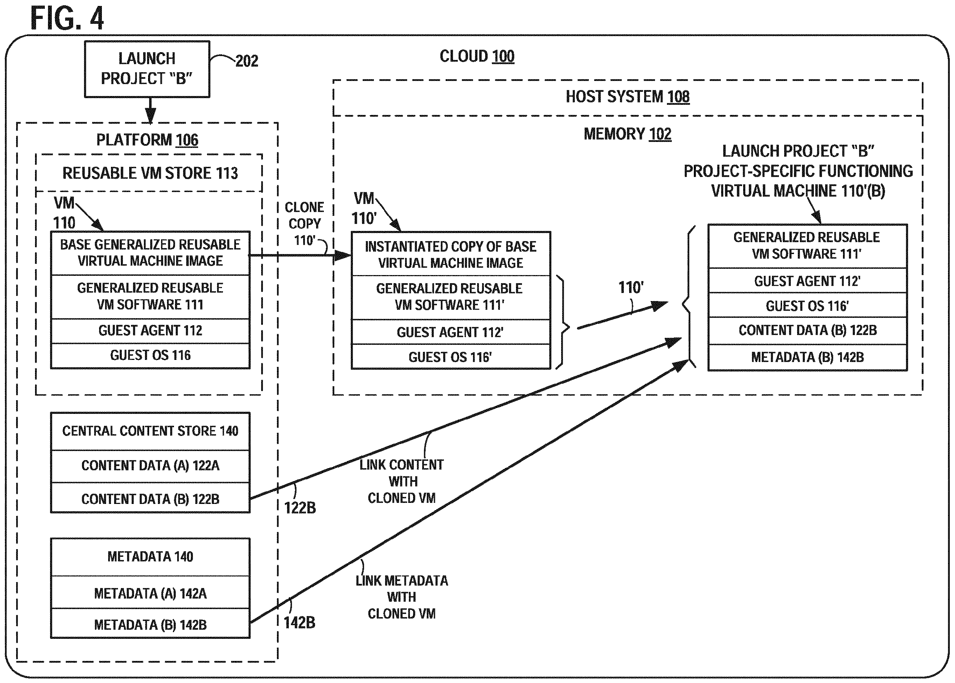

Figure 4 illustrates an example embodiment of the invention of Figure 3, after removal of the first instance of the project specific functioning virtual machine of Figures 2B and 3. The platform is shown responding to a second occurring launch command to realize a second project specific functioning virtual machine to perform a second project-specific function "B". In response, the platform accesses the base generalized reusable virtual machine image and configures memory in the host system by cloning a second instantiated copy of the base generalized reusable virtual machine image. The second instantiated copy includes replicas of the generalized reusable virtual machine executable software, the guest operating system, and the guest agent. The platform also accesses metadata (B) and content data (B). The guest agent is configured to link the second instantiated copy of the base generalized reusable virtual machine image with the metadata (B) and the project specific content data (B) to form a second project specific functioning virtual machine. The second project-specific functioning virtual machine runs in the host system, to perform the project-specific function "B", in response to the second launch command issued by the user or another program.

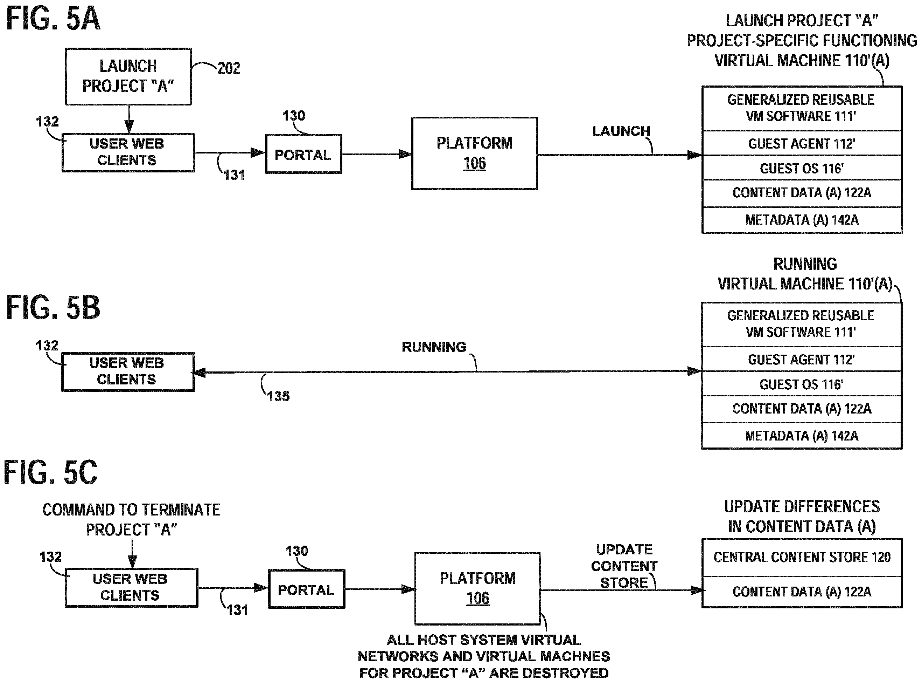

Figures 5A, 5B, and 5C illustrate an example sequence of events in launching a project-specific virtual machine, running the launched virtual machine, and decommissioning the virtual machine at termination, in accordance with embodiments of the invention.

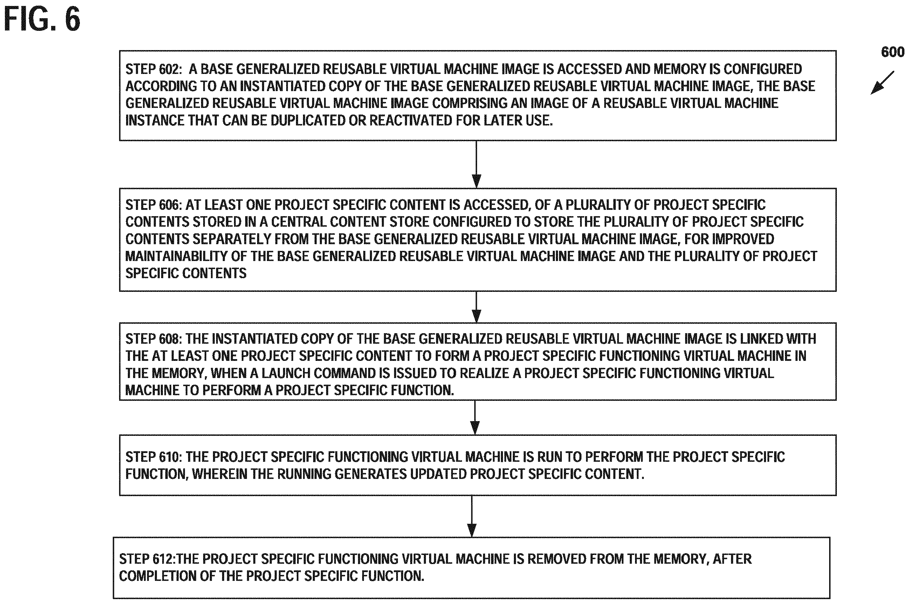

Figure 6 illustrates an example flow diagram of the operation of provisioning, running, and decommissioning a virtual machine, in accordance with embodiments of the invention.

### DISCUSSION OF THE EMBODIMENTS

Example embodiments of the invention solve the problem of maintenance of generalized re-usable machine images, which avoid a resulting fast proliferation of machine images. As used herein, a generalized reusable machine image comprises a base machine image including a guest agent and a guest OS, and one or more software applications capable of running on the guest OS. Example embodiments of the invention provide improvements in computer capabilities. The virtual machine storage and runtime provisioning system, minimizes proliferation of unused project specific function virtual machine images, frees-up storage space in the memory, and enables automated maintenance on the generalized reusable virtual machine and updating of the centralized plurality of project specific contents.

In accordance with embodiments of the invention, the method for creating virtual machines at runtime decouples the application content from the software. The method treats virtual machines as pure application containers. The project / deployment specific content is kept under revision control in a central content store. The content is automatically pulled to the newly provisioned machine as it starts up. The content is versioned and the latest version is always used for new deployments. Existing deployments are updated by explicitly re-pulling only differences in the content from the central content store.

Embodiments of the invention help solve the problem of maintenance of generalized re-usable machine images. In the past, a fast proliferation of machine images would result, which leads to an ever growing library of machine images that need to be updated with new operating system patches and software updates.

In accordance with embodiments of the invention, the image maintenance may be applied to a small set of generalized machine images. This results in a system that lends itself to automated maintenance. The project-specific content also becomes centralized and manageable.

In accordance with embodiments of the invention, just in time aggregation of the application software and the content is automated.

In accordance with embodiments of the invention, the user specifies the content store repository URL when a system blueprint is created. When the launch command is issued by the user or another program, the system automatically installs content from the content store repository, to the newly provisioned virtual machine, before the applications are automatically launched. When the user connects to the machine, they find the correct content loaded.

Figure 1A illustrates an example embodiment of the invention, showing architecture 101 to provision a project-specific functioning virtual machine in a guest system 108, in response to a launch command issued by a user via a web portal 130 to access a platform 106. The platform 106 has as its main function to provision host systems, such as 108, using API calls to Infrastructure-as-a-Service (IasS) 128 providers of a cloud 100, via cloud driver 124.

The architecture 101 includes the following high level components:
1. Portal 130 is a thin web application that allows user web clients 132 access to the platform 106 via the platform services API 126.
2. Platform 106 is a highly available web services application, whose main function is to provision host systems 108, using API calls to the cloud 100 Infrastructure-as-a-Service 128 providers, via cloud driver 124.
3. Host system(s) 108 are provisioned on-demand by the platform 106.

The central component is the platform 106, which is a persistent distributed application running on machines in the cloud 100. The platform's clients are the portal 130 (e.g., a simple web app, a mobile app) and other 3rd party clients 134. Clients may launch and run various types of projects in the host system 108. An example of executable reusable software may be a program for dynamic process simulation. The platform 106 may launch a generalized reusable virtual machine 110' in the host system 108 to run a project-specific function with the executable software. For example, a project "A" (shown in Figure 2B) may be run to design a process for a steam control system in a petroleum refinery. The user may access the virtual machine via a remote desktop/mobile session.

The platform 106 includes the central content store 120, storage for metadata 140, reusable VM store 113, and storage for guest agent software 112. The content store 120 is a service for content storage and revision control. The reusable VM store 113 stores a base generalized reusable virtual machine image VM 110, which includes generalized reusable virtual machine executable software, a guest operating system, and a guest agent.

The platform 106 is a concurrent and distributed application that may run on all cloud data centers 104(0) to 104(i) in the cloud 100 of Figure 1B, and manages all states in the architecture 101. Example functions of the platform 106 are:
- Provision virtual networks and machines 110', and launch guest applications in host systems 108, which may be configured in a reusable base machine image.
- Monitor guest applications and manage their failures.
- Manage user, user group, and resource authorization.
- Build and update machine images as a background task, from recipes as defined by application role definitions.

After the platform 106 has launched the generalized reusable virtual machine 110' in the host system 108, the user web clients 132 may directly interact over path 135 with the virtual machine 110' running in the host system 108.

Figure 1B illustrates the example architecture 101 of Figure 1A, showing the platform 106 as a concurrent and distributed application that runs across a plurality of cloud data centers 104(0) to 104(i) in the cloud 100, to provision host systems 108 and manage the virtual machines 110' launched in the host systems 108.

The Infrastructure as a Service (IaaS) 128 of the architecture 101, is a network utility program for accessing, monitoring, and managing remote datacenter infrastructures 104(0) to 104(i) in the cloud 100, to perform functions such as compute (virtualized or bare metal), storage, networking, and networking services (e.g. firewalls).

Each of the cloud data centers 104(0) to 104(i) of Figure 1B, has a cluster of machines (i.e., host systems 108). The platform 106 is running in a distributed fashion on one or more of those machines and coordinating the launch of the VM in a host system 108. Each machine in a data center includes at least one processor and at least one memory 102. The memory 102 includes computer program code instructions executed by the processor to carry out the operations of the platform 106 currently running on that processor, in accordance with embodiments of the invention.

When a particular data center executes the concurrent and distributed platform 106 application, the platform application 106 currently running on a processor and memory 102 in the data center, performs the method of virtual machine storage and runtime provisioning, in accordance with embodiments of the invention. The platform application 106 running in the cloud data center accesses a base generalized reusable virtual machine image 110 from reusable VM store 113 and configures memory 102 to clone an instantiated copy 110' of the base generalized reusable virtual machine image. The base generalized reusable virtual machine image 110 comprises an image of a reusable virtual machine instance that can be duplicated or reactivated for later use. The platform application 106 running in the cloud data center accesses at least one project specific content from the content store 120, of a plurality of project specific contents stored in the central content store 120. The platform application 106 running in the cloud data center links the instantiated copy 110' of the base generalized reusable virtual machine image 110 with the at least one project specific content to form a project specific functioning virtual machine in the memory 102, in response to a launch command. The launch command may be issued to realize a project specific functioning virtual machine to perform a project specific function. The platform application 106 running in the cloud data center runs the project specific functioning virtual machine to perform the project specific function. The running generates updated project specific content. The platform application 106 running in the cloud data center removes from the memory 102, the project specific functioning virtual machine after completion of the project specific function and stores the updated project specific content in the central content store. In this manner, proliferation is minimized of unused project specific function virtual machine images to free-up the memory 102, compute, storage, networking and/or other resources, in accordance with embodiments of the invention.

Figure 2A illustrates an example embodiment of the invention, showing the base generalized reusable virtual machine image 110 in the reusable VM store 113 in the platform 106, which includes generalized reusable virtual machine executable software 111, a guest operating system1 16, and a guest agent 112. The figure also shows the central content store 120 and the metadata store 140 in the platform 106. The platform 106 enables inter-process communication and dynamic object creation in the host system 108. The base generalized reusable virtual machine image 110 comprises an image of a reusable virtual machine instance that may be duplicated or reactivated for later use. The guest OS 116 is an operating system capable of being executed in the host system 108, and which supports the generalized reusable virtual machine executable software 111.

In accordance with example embodiments of the invention, the central content store 120 is configured to store the plurality of project specific contents 122A and 122B separately from the base generalized reusable virtual machine image 110 in the reusable VM store 113, for improved maintainability of the base generalized reusable virtual machine image 110 and the plurality of project specific contents 122A and 122B.

The metadata 140 may include specific parameter values for a parameterized machine configuration and parameterized application configuration that are to be provided at provisioning time, in response to a launch command. The metadata 140 allows the maintenance of generic application containers that are specialized at the last minute before users access the application. The metadata 140 helps solve the problem of maintenance on machine images with pre-installed applications, so that a separate instance need not be maintained for each specific project. The configured machine image and actions that are automatically performed at provisioning time are maintained centrally in the platform 106 by a respective application team. When an end-user wishes to use the application in a specific project, it is included in a specific project definition or system blueprint. The end-user may define some of the metadata parameters in the system blueprint to specialize the virtual machine configuration for the specific project (e.g. file locations or remote URLs where content is to be found). When the user wishes to invoke a running instance of the project-specific functioning virtual machine, a launch command is issued. The platform 106 provisions and automates the project-specific functioning virtual machine. The parameter values are applied to the project-specific functioning virtual machine just before the system is ready and running.

The platform 106 includes a plurality of project specific contents 122A and 122B stored in the central content store 120. Each of the plurality of project specific contents, for example 122A, is configurable to link to a copy of the base generalized reusable virtual machine image at runtime, forming a project functioning virtual machine 110'(A) (shown in Figure 2B). Another project specific content, for example 122B, is configurable to link to a copy of the base generalized reusable virtual machine image at runtime, forming another project functioning virtual machine 110'(B) (shown in Figure 4).

Examples of the generalized reusable virtual machine executable software 111 may include an executable software program for dynamic process simulation. A first example project-specific function to which the executable software 111 may be applied may be a project "A" (shown in Figure 2B) to design a process for a steam control system in a petroleum refinery. Example project specific content data 122A may include data associated with a design of a process for a steam control system, the content data 122A to be operated on by the project functioning virtual machine 110'(A) (shown in Figure 2B). Example content data 122A may include steam source data, valve data, piping data, controlling logic, and the like.

Another example project-specific function to which the executable software 111 may be applied may be a project "B" (shown in Figure 4) to data associated with a design of a process for a flare system in a petroleum refinery. Example project specific content data 122B may include data required to design a process for a flare system, the content data 122B to be operated on by the project functioning virtual machine 110'(B) (shown in Figure 4). Example content data 122B may include combustible gas source data, valve data, piping data, controlling logic, and the like.

Figure 2B illustrates an example embodiment of the invention of Figure 2A, showing the platform 106 responding to a launch command 202 to realize a project specific functioning virtual machine 110'(A) to perform project-specific function "A". In response, the platform 106 accesses the base generalized reusable virtual machine image 110 from reusable VM store 113 and configures memory 102 in the host system 108 by cloning an instantiated copy 110' of the base generalized reusable virtual machine image 110, including replicas of the generalized reusable virtual machine executable software 111', the guest operating system 116', and the guest agent 112'. The platform 106 also accesses metadata (A) 142A and content data (A) 122A. The guest agent 112' is configured to link the instantiated copy 110' of the base generalized reusable virtual machine image 110 with the metadata (A) 142A and the project specific content data (A) 122A to form a project specific functioning virtual machine 110'(A). The metadata (A) 142A is accessed, including specific parameter values for a parameterized virtual machine configuration and parameterized application configuration that are to be provided at provisioning time in response to the launch command. The metadata parameters specialize the virtual machine configuration for the specific project (e.g. file locations or remote URLs where content is to be found).

The project-specific functioning virtual machine 110'(A) runs in the host system 108, to perform the project-specific function "A", in response to the launch command 202 issued by the user or another program. In the example discussed above, the project specific content data 122A may include steam source data, valve data, piping data, controlling logic, and the like, which is operated on by the project functioning virtual machine 110'(A) executing the project for designing a process for a steam control system.

Figure 3 illustrates an example embodiment of the invention of Figure 2B, showing decommissioning of all resources used by the project specific functioning virtual machine 110'(A). Memory portions are reclaimed, which were occupied by the project specific functioning virtual machine110'(A), after the project-specific function "A" has been completed or terminated. The concurrent and distributed platform 106 application is currently being executed in a particular one of the cloud data centers 104(0) to 104(i) of Figure 1B, and thus the data center memory 102 is decommissioned to remove all resources used by the generalized reusable virtual machine 110, in accordance with embodiments of the invention.

When the platform 106 creates the project specific functioning virtual machine 110'(A) in Figure 2B, it records information about the project specific functioning virtual machine 110'(A) in a registry 105 shown in Figure 3. The registry 105 is a database that stores information, such as the virtual machine identifier and address, and the identities of other objects that reference or point to the project specific functioning virtual machine 110'(A). The registry enables other application programs to locate the project specific functioning virtual machine 110'(A). When the registry 105 indicates that there are no other application programs that refer or point to the project specific functioning virtual machine 110'(A), the decommissioning algorithm 107 detects this condition and performs the decommissioning. Automatic memory management is performed to reclaim the memory segments occupied by the project specific functioning virtual machine 110'(A), after completion or termination of the project specific function, Project "A".

The decommissioning releases back to the cloud 100 all of the resources (memory, CPUs, network connections, etc.) used by the project specific functioning virtual machine 110'(A), after completion of the project-specific function, project "A". The decommissioning algorithm 107 may operate automatically or the user may invoke it manually.

After completion of the project specific function "A", the project specific content data 122A may include updates as a result of the project specific functioning virtual machine 110'(A) running and performing the project specific function, Project "A". The updated project specific content data 122A is stored in the central content store 120, and may overwrite the original content data 122A.

The project specific content 122A is kept under revision control in the central content store 120A. Project specific content updates may be received and buffered in the buffer 103. The content is versioned and the latest version is always used for new deployments. In some instances, a specific version of the content may be retrieved for deployment. The algorithm 109 may determine the difference in the content to be updated. Existing content in the central content store 120 may be updated by changing only the differences in the content being updated.

In this manner, embodiments of the invention minimize proliferation of unused project specific function virtual machine images, free-up storage space in the memory.

Figure 4 illustrates an example embodiment of the invention of Figure 3, after removal of the first instance 110'(A) of the project specific functioning virtual machine of Figures 2B and 3. The platform 106 is shown responding to a second occurring launch command 202 to perform a second project-specific function "B".

In response, the platform 106 accesses the base generalized reusable virtual machine image 110 from reusable VM store 113 and configures memory 102 in the host system 108 by cloning a second instantiated copy 110' of the base generalized reusable virtual machine image 110, including replicas of the generalized reusable virtual machine executable software 111', the guest operating system 116', and the guest agent 112'. The platform 106 also accesses metadata (B) 142B and content data (B) 122B. The guest agent 112' is configured to link the second instantiated copy 110' of the base generalized reusable virtual machine image 110 with the metadata (B) 142B and the project specific content data (B) 122B to form a second project specific functioning virtual machine 110'(B). The metadata (B) 142B is accessed, including specific parameter values for a parameterized virtual machine configuration and parameterized application configuration that are to be provided at provisioning time in response to the launch command. The metadata parameters specialize the virtual machine configuration for the specific project (e.g. file locations or remote URLs where content is to be found).

The project-specific functioning virtual machine 110'(B) runs in the host system 108, to perform the project-specific function "B", in response to the launch command 202 issued by the user or another program. In the example discussed above, the project specific content data 122B may include combustible gas source data, valve data, piping data, controlling logic, and the like, which is operated on by the project functioning virtual machine 110'(B) to design a process for a flare system.

Figures 5A, 5B, and 5C illustrate an example sequence of events in launching a project-specific virtual machine, running the launched virtual machine, and decommissioning the virtual machine at termination, in accordance with embodiments of the invention.

Figure 5A illustrates an example of launching a project-specific virtual machine 110'(A), for example by user clients or clients, as was described for Figure 2B.

Figure 5B illustrates an example of running the launched virtual machine 110'(A), as was described for Figure 2B.

Figure 5C illustrates an example of decommissioning the virtual machine 110'(A) at termination, as was described for Figure 3.

Figure 6 illustrates an example embodiment of the invention, showing a flow diagram 600 of a programmed method for provisioning, running, and decommissioning a virtual machine, executed by the system of Figures 1 to 4, in accordance with embodiments of the invention. The steps of the flow diagram represent computer code instructions stored in a memory, which when executed by central processing units (CPU), carry out the functions of the example embodiments of the invention. The steps may be carried out in another order than shown and individual steps may be combined or separated into component steps. The flow diagram has the following steps:
At step 602, a base generalized reusable virtual machine image is accessed and memory is configured according to an instantiated copy of the base generalized reusable virtual machine image, the base generalized reusable virtual machine image comprising an image of a reusable virtual machine instance that can be duplicated or reactivated for later use.
At step 606, at least one project specific content is accessed, of a plurality of project specific contents stored in a central content store configured to store the plurality of project specific contents separately from the base generalized reusable virtual machine image, for improved maintainability of the base generalized reusable virtual machine image and the plurality of project specific contents.
At step 608, the instantiated copy of the base generalized reusable virtual machine image is linked with the at least one project specific content to form a project specific functioning virtual machine in the memory, when a launch command is issued to realize a project specific functioning virtual machine to perform a project specific function.
At step 610, the project specific functioning virtual machine is run to perform the project specific function, wherein the running generates updated project specific content.
At step 612, the project specific functioning virtual machine is removed from the memory, after completion of the project specific function. This clean up or decommissioning process reduces proliferation of unused project specific function virtual machine images, freeing-up compute, storage and memory, networking, and/or other resources in the data center. During the time the project specific functioning virtual machine was in use, at least one project specific content may have been updated. In that case, the updated project specific content is stored in the central content store. By having the generalized reusable virtual machine images and the project specific content stored separately, each can also be managed separately and more efficiently. For example, automated maintenance can be performed on the generalized reusable virtual machine images to update the software, the operating system and/or other services. Similarly, version control can be performed to keep track of updates to project specific contents in the central content store.

Although specific example embodiments of the invention have been disclosed, persons of skill in the art will appreciate that changes may be made to the details described for the specific example embodiments, without departing from the spirit and the scope of the invention.

Accordingly the invention also relates to virtual machine storage and runtime provisioning comprising accessing a base generalized reusable virtual machine image and configuring memory according to an instantiated copy of the base virtual machine image. Project specific content can be accessed from a central content store configured to store content separately from the base machine image. The instantiated machine image and project specific content can be linked at launch time to form a project specific functioning virtual machine. After completion of the project specific function, the project specific content can be stored separately and the project specific functioning virtual machine is removed from memory. This minimizes use of virtual machine instances to only when needed and makes content available to other users. This also minimizes proliferation of unused project specific function virtual machine images, frees-up storage space, and enables easier automated maintenance of separately stored base virtual machine images and updating of the centralized plurality of project specific contents.

## Claims

1. Virtual machine storage and runtime provisioning system, comprising:
means for accessing a base generalized reusable virtual machine image and configuring memory according to an instantiated copy of the base generalized reusable virtual machine image, the base generalized reusable virtual machine image comprising an image of a reusable virtual machine instance that can be duplicated or reactivated for later use;
means for accessing at least one project specific content of a plurality of project specific contents stored in a central content store configured to store the plurality of project specific contents separately from the base generalized reusable virtual machine image, for improved maintainability of the base generalized reusable virtual machine image and the plurality of project specific contents;
means for linking the instantiated copy of the base generalized reusable virtual machine image with the at least one project specific content to form a project specific functioning virtual machine in the memory, the linking being responsive to a launch command issued to realize a project specific functioning virtual machine to perform a project specific function;
means for running the project specific functioning virtual machine to perform the project specific function, wherein the running generates updated project specific content; and
means for removing from the memory, the project specific functioning virtual machine after completion of the project specific function and storing the updated project specific content in the central content store.

2. System according to claim 1, further comprising:
said means for creating, configured to create a second instantiated copy of the base generalized reusable virtual machine image after removal of the project specific functioning virtual machine, accessing second project specific content of the plurality of project specific contents, and linking the second project specific content to the second instantiated copy of the base generalized reusable virtual machine image at runtime to form a second project functioning virtual machine, when a launch command is issued to realize a second project specific functioning virtual machine to perform a second project specific function.

3. System according to any of the preceding claims, further comprising:
said means for creating, cloning the instantiated copy of the base generalized reusable virtual machine image.

4. System according to claim 3, wherein said base generalized reusable virtual machine image includes a guest agent configured to link the cloned instantiated copy of the base generalized reusable virtual machine image and the at least one project specific content to form the project specific functioning virtual machine.

5. System according to any of the preceding claims, further comprising:
said means for accessing being configured to access metadata including specific parameter values for a virtual machine configuration to be provided in response to the launch command; and
said means for linking being configured to link the instantiated copy of the base generalized reusable virtual machine image with the metadata to form the project specific functioning virtual machine in the memory, when the launch command is issued.

6. Method of virtual machine storage and runtime provisioning, comprising:
accessing a base generalized reusable virtual machine image and configuring memory according to an instantiated copy of the base generalized reusable virtual machine image, the base generalized reusable virtual machine image comprising an image of a reusable virtual machine instance that can be duplicated or reactivated for later use;
accessing at least one project specific content of a plurality of project specific contents stored in a central content store configured to store the plurality of project specific contents separately from the base generalized reusable virtual machine image, for improved maintainability of the base generalized reusable virtual machine image and the plurality of project specific contents;
linking the instantiated copy of the base generalized reusable virtual machine image with the at least one project specific content to form a project specific functioning virtual machine in the memory, the linking being responsive to a launch command issued to realize a project specific functioning virtual machine to perform a project specific function;
running the project specific functioning virtual machine to perform the project specific function, wherein the running generates updated project specific content; and
removing from the memory, the project specific functioning virtual machine after completion of the project specific function and storing the updated project specific content in the central content store.

7. Method according to claim 6, further comprising:
creating a second instantiated copy of the base generalized reusable virtual machine image after removal of the project specific functioning virtual machine, accessing second project specific content of the plurality of project specific contents, and linking the second project specific content to the second instantiated copy of the base generalized reusable virtual machine image at runtime to form a second project functioning virtual machine, when a launch command is issued to realize a second project specific functioning virtual machine to perform a second project specific function.

8. Method according to any of claims 6 to 7, further comprising:
cloning the instantiated copy of the base generalized reusable virtual machine image.

9. Method according to claim 8, wherein said base generalized reusable virtual machine image includes a guest agent configured to link the cloned instantiated copy of the base generalized reusable virtual machine image and the at least one project specific content to form the project specific functioning virtual machine.

10. Method according to any of claims 6 to 9, further comprising:
accessing metadata including specific parameter values for a virtual machine configuration to be provided in response to the launch command; and
linking the instantiated copy of the base generalized reusable virtual machine image with the metadata to form the project specific functioning virtual machine in the memory, when the launch command is issued.

11. Computer program product for virtual machine storage and runtime provisioning, comprising computer executable program code recorded on a computer readable, non-transitory storage medium, the computer executable program code comprising:
code for accessing a base generalized reusable virtual machine image and configuring memory according to an instantiated copy of the base generalized reusable virtual machine image, the base generalized reusable virtual machine image comprising an image of a reusable virtual machine instance that can be duplicated or reactivated for later use;
code for accessing at least one project specific content of a plurality of project specific contents stored in a central content store configured to store the plurality of project specific contents separately from the base generalized reusable virtual machine image, for improved maintainability of the base generalized reusable virtual machine image and the plurality of project specific contents;
code for linking the instantiated copy of the base generalized reusable virtual machine image with the at least one project specific content to form a project specific functioning virtual machine in the memory, the linking being responsive to a launch command issued to realize a project specific functioning virtual machine to perform a project specific function;
code for running the project specific functioning virtual machine to perform the project specific function, wherein the running generates updated project specific content; and
code for removing from the memory, the project specific functioning virtual machine after completion of the project specific function and storing the updated project specific content in the central content store.

12. Computer program product according to claim 11, further comprising:
code for creating a second instantiated copy of the base generalized reusable virtual machine image after removal of the project specific functioning virtual machine, accessing second project specific content of the plurality of project specific contents, and linking the second project specific content to the second instantiated copy of the base generalized reusable virtual machine image at runtime to form a second project functioning virtual machine, when a launch command is issued to realize a second project specific functioning virtual machine to perform a second project specific function.

13. Computer program product according to any of claims 11 to 12, further comprising:
code for cloning the instantiated copy of the base generalized reusable virtual machine image.

14. Computer program product according to claim 13, wherein said base generalized reusable virtual machine image includes a guest agent configured to link the cloned instantiated copy of the base generalized reusable virtual machine image and the at least one project specific content to form the project specific functioning virtual machine.

15. Computer program product according to any of claims 11 to 14, further comprising:
code for accessing metadata including specific parameter values for a virtual machine configuration to be provided in response to the launch command; and
code for linking the instantiated copy of the base generalized reusable virtual machine image with the metadata to form the project specific functioning virtual machine in the memory, when the launch command is issued.
